Europäisches Patentamt

European Patent Office

Office européen des brevets

(19)

(11) Numéro de publication: **0 316 390 B1**

(12) **FASCICULE DE BREVET EUROPEEN**

(45) Date de publication de fascicule du brevet: **01.09.93**

(51) Int. Cl.⁵: **C01G 25/02**, C01G 27/02, C01G 23/07, C01B 13/22

(21) Numéro de dépôt: **88904559.7**

(22) Date de dépôt: **16.05.88**

(86) Numéro de dépôt internationale :
**PCT/FR88/00247**

(87) Numéro de publication internationale :
**WO 88/09307 (01.12.88 88/26)**

(54) **PROCEDE D'OBTENTION DE POUDRE FINE D'OXYDE METALLIOUE (ZIRCONIUM, HAFNIUM, TITANE) AYANT UNE SURFACE SPECIFIOUE OU UNE GRANULOMETRIE PREDETERMINEE.**

(30) Priorité: **18.05.87 FR 8705465**

(43) Date de publication de la demande:
**24.05.89 Bulletin 89/21**

(45) Mention de la délivrance du brevet:
**01.09.93 Bulletin 93/35**

(84) Etats contractants désignés:
**CH DE FR GB LI SE**

(56) Documents cités:
**EP-A- 0 214 308**
**DE-C- 953 254**
**US-A- 1 931 380**

**Chemical Abstracts, vol. 107, No. 14, Octobre 1987 (Columbus, Ohio, US), K.H. Kim et al.: "Preparation of ultra-fine titanium oxide particles by using gas-phase chemical reactions", voir page 126, résumé No. 117795g, & Earozoru Kenkyu 1986, (1(4), 266-73**

(73) Titulaire: **Compagnie Européenne du Zirconium CEZUS**
**Tour Manhattan 6 place de l'Iris**
**F-92400 Courbevoie(FR)**

(72) Inventeur: **BARRAL, Robert Lotissement Le Surville**
**S.-Georges-de-Commiers**
**F-38450 Vif(FR)**
Inventeur: **DUPIN, Thierry**
**5, rue Pré-de-Treille**
**F-38320 Eybens(FR)**

(74) Mandataire: **Vanlaer, Marcel et al**
**PECHINEY 28, rue de Bonnel**
**F-69433 Lyon Cédex 3 (FR)**

EP 0 316 390 B1

## Description

## DOMAINE TECHNIQUE

L'invention concerne un procédé d'obtention de poudre fine d'oxyde de zirconium et/ou hafnium et/ou titane, ayant une granulométrie et une surface spécifique prédéterminée; ce procédé est tel qu'en réglant certains paramètres opératoires, il est possible de régler la granulométrie et la surface spécifique de la poudre obtenue à une valeur prédéterminée, adaptée à l'utilisation ultérieure que l'on veut en faire.

## ETAT DE LA TECHNIQUE

L'industrie des céramiques techniques utilise les poudres de zircone et/ou d'hafnone, ce terme désignant l'oxyde de hafnium, et/ou d'oxyde de titane, à des applications très diverses qui requièrent pour chacune d'elles des caractéristiques particulières de la poudre de départ qui, en général, est une poudre fine, composée de particules constituées d'un seul ou d'un petit nombre de cristallites élémentaires, dont le diamètre médian des particules est -de l'ordre du ou inférieur au $\mu$m. En particulier, la surface spécifique et la granulométrie d'une telle poudre, ainsi que parfois la teneur résiduelle en chlore sont des paramètres essentiels d'une telle poudre de départ.

Pour un même type de poudre, la granulométrie et la surface spécifique sont en général liées : plus la surface spécifique est grande, plus la granulométrie est fine. Mais la relation entre ces deux grandeurs dépend essentiellement du facteur de forme des particules, c'est-à-dire de leur état d'agrégation et d'agglomération.

Pour l'utilisation de ces poudres à l'obtention de céramiques techniques, il est nécessaire de disposer comme cela a été dit, de poudres fines ayant un facteur de forme le plus simple possible en évitant la présence d'agrégats et d'agglomérats. Il importe donc à l'homme de l'art devant fournir ces poudres, de contrôler à la fois leur granulométrie, leur surface spécifique et de limiter leur état d'agrégation et d'agglomération.

Ainsi la poudre de zircone pour cristallogénèse doit avoir une surface spécifique BET comprise habituellement entre 3 et 6 m2/g.

Par ailleurs, la zircone (hafnone) peut être utilisée comme ajout par dispersion dans une matrice elle-même en céramique en vue de la renforcer. Dans ce cas la surface spécifique de la poudre de départ se situe entre 10 et 20 m2/g. Elle peut également être utilisée comme base pour des céramiques partiellement ou totalement stabilisées, les surfaces spécifiques sont alors comprises entre 10 et 25 m2/g, et la nature et/ou la quantité de la ou des phases stabilisées obtenues (tétragonale et/ou cubique) dépend de la granulométrie. Pour ces applications aux céramiques techniques, il est souhaitable que la graulométrie soit comprise entre 2 et 0,1 $\mu$m.

La zircone (hafnone) peut aussi être utilisée comme couche microporeuse ou comme support de catalyseur, auquel cas la surface spécifique de la poudre de départ sera généralement comprise entre 2O m2/g et jusqu'à au moins 100 m2/g. Elle peut être utilisée en suspension stable (coulée en barbotine, polissage...) dans ce cas, la surface spécifique est généralement supérieure à 10 m2/g, et la granulométrie doit être adaptée à la nature et à la viscosité du milieu dans lequel doit être réalisée la suspension.

Ces oxydes peuvent également rentrer dans des compositions complexes obtenues par chamottage et il est alors nécessaire que leur granulométrie soit compatible avec celle des autres constituants et suffisamment fine pour obtenir un mélange homogène et une bonne réactivité.

Ces exemples montrent bien la nécessité, pour l'homme de l'art de pouvoir fournir une poudre fine de zircone, hafnone ou oxyde de titane, ayant une granulométrie ou une surface spécifique contrôlée, adaptée à la demande du céramiste utilisateur.

Une telle poudre peut être obtenue:

i- soit en deux étapes par hydrolyse du chlorure Zr (Hf) Cl₄ solide à l'aide de vapeur d'eau pour obtenir l'oxychlorure, puis par décomposition thermique de ce dernier à température élevée (jusqu'à 1500°C) et sous atmosphère oxydante (air) et de vapeur d'eau.

Ce procédé conduit à un produit ayant une grande surface spécifique et une granulométrie médiane supérieure au $\mu$m. Les particules obtenues sont en général sous forme d'agglomérats difficiles, voire impossibles à broyer pour obtenir une poudre submicronique. Il présente également l'inconvénient de donner du chlore comme sous produit lors de la deuxième étape.

Un procédé de ce type est décrit dans le brevet FR 1 209 473 (Grach) qui comprend deux étapes:

.  on fait absorber de l'eau sous forme liquide ou vapeur par le tétrachlorure de zirconium maintenu à une température, de préférence 250°C, inférieure à son point de sublimation 331°C, jusqu'à

2

obtention d'un hydrate de chlorure de zyrconyle ne contenant plus de Zr Cl$_4$ sublimable et contenant de l'acide.

. on chauffe ensuite l'hydrate à une température d'au moins 500°C, allant jusqu'à 1500°C pour obtenir ZrO$_2$.

. on peut compléter par une troisième étape de calcination à 1000°C lorsque l'on doit obtenir une zircone à usage céramique.

ii- soit en traitant en solution aqueuse un sel de zirconium (hafnium), par exemple nitrate, sulfate, chlorure..., à l'aide d'une base pour obtenir l'hydroxyde qui est ensuite calciné. Les poudres obtenues peuvent avoir de grandes surfaces spécifiques, notamment grâce à l'emploi de procédés sol-gel, mais se présentant sous forme de particules agglomérées ayant une granulométrie d'un diamètre médian toujours supérieur à 0,5 um et nécessitant une réduction de taille avec les inconvénients, dus au broyage, vus précédemment.

iii- soit par action à haute température (vers 1300°C) de l'oxygène sur le tétrachlorure. Ce procédé, tout en donnant des poudres submicroniques et à grande surface spécifique, présente les inconvénients de ne pas pouvoir maîtriser lesdites surfaces, d'utiliser des températures élevées et de générer un effluent à base de chlore, qu'il est difficile de traiter avant rejet ou recyclage.

iv- soit par un procédé voisin du précédent qui consiste, comme il est décrit dans FR-A-1 458 298, à hydrolyser le tétrachlorure dans une flamme en présence d'un gaz inerte à 1200 - 1350°C. Le tétrachlorure sublimé est amené dans un brûleur avec le gaz combustible et le comburant (oxygène); la réaction se fait en présence d'un gaz inerte qui peut être recyclé après lavage et qui peut ainsi contenir du chlore généré lors de la réaction dans la flamme et non éliminé au lavage.

Les quantités de réactifs utilisées sont telles que la quantité d'eau produite pendant la combustion permette l'hydrolyse du tétrachlorure; l'oxygène réagit également avec le tétrachlorure

Dans ces conditions:

. l'effluent gazeux contient jusqu'à 10% de chlore formé selon une réaction du type: Zr Cl$_4$ + O$_2$ → ZrO$_2$ + 2Cl$_2$

. la poudre obtenue est très fine (0,02 $\mu$m). "la surface efficace de contact", dont la signification n'est pas précisée, et dont on ne sait pas si on peut la comparer à une surface BET, va de 175 à 190 m2/g dans le cas de l'obtention de SiO$_2$. Une transposition de ce procédé à l'obtention de la zircone, par exemple, ne permettrait pas de prévoir quelle serait la granulométrie, la surface spécifique et/ou l'aspect des particules obtenus.

Ce procédé, outre la fourniture d'une quantité importante de chlore dans ses effluents, présente les inconvénients d'utiliser une température élevée dans la flamme et de n'obtenir que des grains très fins et des surfaces spécifiques de valeur moyenne, pour autant que l'on puisse comparer la "surface efficace de contact" décrite à une surface spécifique BET, déterminée selon la norme AFNOR NF-X11-621-75-11, et de ne pas pouvoir maîtriser à volonté les caractéristiques de la poudre obtenue.

v- Par ailleurs, le document DE-C-953254 (Degussa) décrit un traitement d'hydrolyse en phase gazeuse de tétrachlorure métallique par de la vapeur d'eau en présence d'un gaz porteur inerte. Les conditions opératoires utilisées notamment l'excès d'eau et la dilution dans le gaz inerte, sont telles qu'on peut régler la taille des particules de la poudre d'oxyde obtenue en jouant sur la température de réaction. Ainsi, la taille des particules est de l'ordre de la centaine de $\mu$m et n'est pas inférieure à 20 $\mu$m. La surface interne est également élevée, mais compte tenu des granulométries obtenues, cela montre que les particules sont obligatoirement fortement agrégées et agglomérées.

Les poudres obtenues sont d'ailleurs particulièrement adaptées comme charge de caoutchouc et ne pourraient être utilisées telles quelles comme matière première dans le domaine des céramiques fines techniques.

Il serait nécessaire, pour une telle utilisation, d'en diminuer la surface spécifique par un traitement (par exemple calcination) et/ou de réduire la taille des agglomérats et agrégats par une opération de broyage. Ces opérations supplémentaires sont coûteuses, difficiles à mettre en oeuvre, notamment dans le cas où on veut des poudres très fines inférieurs à 2 $\mu$m, et sont la cause de pollution supplémentaire préjudiciable.

Le document Earozoru Kenkyu (1986) 1(4) 266.273 (voir aussi Chemical Abstracts Vol.107 n°14 p.126 n°117795g - oct.1987) montre par ailleurs que la taille des particules de TiO$_2$ obtenues par hydrolyse en phase gazeuse, en présence, de vapeur d'eau, dimunue, avec augmentation du degré d'agglomération, quand la pression partielle de TiCl$_4$ diminue et la température augmente.

Si l'on excepte un essai effectué à très haute temperature (1373 K) et à trés faible pression partielle de TiCl$_4$ (0,2 kPa), ce document suggère d'opérer en présence d'un très fort excés d'eau (rapport H$_2$O:TiCl$_4$ de 72:1 à 132:1) et ne dit rien concernant les valeurs des surfaces spécifiques obtenues.

## OBJET DE L'INVENTION

Compte tenu des inconvénients et des exigences décrits ci-dessus, la présente invention a pour objet l'obtention directe, c'est-à-dire sans broyage ou autre traitement supplémentaire, d'une poudre fine d'oxyde métallique (zircone, hafnone ou oxyde de titane) dont la granulométrie et/ou la surface spécifique BET sont réglées à volonté à une valeur prédéterminée, choisie en fonction de l'utilisation prévue pour ladite poudre produite, ladite valeur étant obtenue en réglant à des valeurs particulières certains paramètres opératoires du procédé.

L'objet est également de disposer d'un procédé non polluant, se déroulant en phase gazeuse à basse température et ne générant, comme effluent, que de l'acide chlorhydrique et peu de chlore plus difficile à traiter et récupérer.

Un autre objet est de disposer d'un procédé en une seule étape.

Un autre objet est d'obtenir une poudre dont les particules sont constituées d'un ou seulement d'un petit nombre de cristallites, lesdites particules ne devant pas être des agglomérats complexes.

En particulier, le procédé selon l'invention permet d'obtenir directement, c'est-à-dire sans broyage ou méthodes de sélection granulométrique tels que tamissage ou autres..., des poudres fines desdits oxydes métalliques dont la granulométrie est aisément choisie dans la gamme allant d'un diamètre médian d'environ 2 $\mu$m, à un diamètre médian inférieur à 0,1 $\mu$m, dans ce cas le refus à 0,2 $\mu$m est inférieur à 1%. De même, on peut obtenir directement des poudres d'oxyde métallique dont la surface spécifique est aisément choisie dans la gamme allant de 3m$^2$/g à 110 m$^2$/g.

## DESCRIPTION DE L'INVENTION

L'invention est un procédé d'obtention directe d'une poudre fine d'oxyde métallique, tel que la zircone, l'hafnone ou l'oxyde de titane, composée de particules constituées d'un seul ou d'un petit nombre de cristallites élémentaires, ladite poudre ayant de plus une granulométrie choisie et contrôlée de diamètre médian inférieur à environ 2 $\mu$m et une surface spécifique BET également choisie et contrôlée, ledit procédé comportant l'hydrolyse en phase gazeuse à basse température, comprise entre 300° et 800°C, du tétrachlorure métallique volatil correspondant à l'oxyde à obtenir, à l'aide de vapeur d'eau en présence d'un gaz inerte, la pression partielle de tétrachlorure étant maintenue à une valeur constante prédéterminée (comprise entre 3 et 30% de la pression totale du mélange réactionnel de départ, reconstitué fictivement par addition des débits des réactifs gazeux) fonction de la granulométrie et de la surface spécifique BET recherchée, comprise entre 3 m$^2$/g et 110 m$^2$/g, et étant caractérisé en ce que le rapport molaire eau sur tétrachlorure métallique est compris entre 2 et 10.

Si M représente un élément métallique, dont le chlorure est volatil, tel que Zr, Hf et/ou Ti, l'hydrolyse se produit selon la réaction :

$$M\ Cl_{4\,vap}\ +\ 2H_2O_{vap}\ \rightarrow\ M\ O_{2\ solide}\ +\ 4HCl_{gaz}$$

a une température au moins supérieure à la température de sublimation du tétrachlorure de zirconium ou de hafnium, ou à la température de vaporisation du tétrachlorure de titane; elle est comprise dans l'intervalle 300-800°C et plus particulièrement dans l'intervalle 410°C - 600°C. Une température située dans la zone élevée de la fourchette est un élément favorable pour diminuer la teneur en chlore du produit obtenu.

Pour obtenir la granulométrie et la surface spécifique BET choisie, il est essentiel de régler la quantité de tétrachlorure introduite à une valeur constante prédéterminée en fixant sa pression partielle dans le mélange réactionnel de départ, reconstitué fictivement par addition des débits de réactifs gazeux, y compris celui de gaz inerte, à une valeur de la pression totale comprise entre 3 et 30%, de préférence entre 4 et 25%.

Ainsi :

. la surface spécifique BET correspondante obtenue, mesurée selon la norme AFNOR - NF - X11 - 621 - 75 - 11, a une valeur se situant entre 3 m2/g et 11O m2/g ou plus; aux faibles pressions partielles correspondent les surfaces spécifiques élevées, et aux fortes pressions partielles correspondent les faibles surfaces spécifiques.

. la granulométrie correspondante obtenue, se situe entre un diamètre médian d'environ 2 $\mu$m pour les fortes pressions partielles du tétrachlorure et un diamètre médian inférieur à 0,1 $\mu$m, correspondant à

4

un refus à 0,2 $\mu$m inférieur à 1% pour les pressions partielles faibles.

Dans le domaine préférentiel, quand la pression partielle est choisie et réglée à une valeur comprise entre 25% et 4% de la pression totale, la valeur de la surface spécifique se situe entre 5 m2/g et 80m2/g, et la granulométrie se situe entre un diamètre médian de 1,5 $\mu$m et un diamètre médian inférieur à 0,1 $\mu$m correspondant à un refus à 0,2 $\mu$m allant de 5 à 10%.

La quantité de vapeur d'eau introduite dans le milieu réactionnel, est toujours supérieure à la stoechiométrie de la réaction avec le tétrachlorure; le rapport molaire H20/tétrachlorure se situe entre 2 et 10 et de préférence entre 2 et 8. Son effet sur la granulométrie ou la surface spécifique est tel que du côté des plus grands excès d'eau on obtient des grains plus fins, à pression partielle de tétrachlorure constante. Cet effet est cependant moins marqué que celui obtenu par la dilution du tétrachlorure.

Par contre, on note de façon surprenante qu'il est essentiel de maintenir la quantité de vapeur d'eau dans les limites préconisées selon l'invention pour obtenir des particules constituées d'un seul ou d'un petit nombre de cristallites élémentaires. En effet, si on augmente ladite quantité de vapeur d'eau au-delà des limites supérieures préconisées, la granulométrie ne diminue plus comme cela était prévu, mais elle augmente et de plus les particules ne sont plus des cristallites simples mais des agglomérats, de cristallites, complexes et de taille importante. Dans ce cas, la surface spécifique peut rester élevée bien que la granulométrie de la poudre soit plus grosse, ce qui est contraire à ce que l'on observe habituellement quand on a une poudre formée de cristallites simples ou peu agglomérée dans laquelle, comme cela a déjà été dit, un produit fin correspond à une surface spécifique élevée.

Ce phénomène de grossissement peut s'expliquer par le fait qu'un excès d'eau trop important tend à favoriser la formation d'agglomérats et d'agrégats de cristallites simples obtenus par ailleurs grâce à la dilution du tétrachlorure

L'utilisation d'un faible excès d'eau présente par ailleurs d'autres avantages, comme par exemple la diminution du volume des effluents à traiter et une taille plus réduite des appareils.

La réaction se passe dans une enceinte chauffée par un moyen quelconque. La pression dans l'enceinte peut avoir une valeur quelconque, mais pour des raisons pratiques, on préfère opérer à une pression voisine de la pression atmosphérique.

Chacun des réactifs est introduit simultanément dans l'enceinte à l'aide d'un conduit qui lui est propre; ces conduits débouchent de préférence dans la partie haute de l'enceinte, leurs axes respectifs peuvent former un angle de valeur variable, être parallèles ou confondus, dans ce dernier cas les deux conduits sont concentriques. En général, leurs extrémités sont situées à un même niveau. La façon dont est réalisé le mélange des réactifs dans l'enceinte a une influence sur la surface spécifique et la granulométrie: si la disposition des conduits est telle que le mélange est très intime on favorise une surface spécifique élevée et une granulométrie fine; inversement si on réalise un mélange sommaire on favorise une faible surface spécifique et une taille des grains plus élevée tout en restant inférieure à 2 $\mu$m.

Pour augmenter l'homogénéité du mélange, on peut utiliser un dispositif d'agitation, par exemple agitateur à pales, à l'intérieur de l'enceinte. L'emploi d'un tel dispositif améliore également la stabilité de la réaction et l'homogénéité des résultats obtenus. (fourchette granulométrique resserée, surface spécifique constante dans un lot de produit).

L'introduction des réactifs, tétrachlorure et/ou vapeur d'eau, peut être fractionnée, c'est-à-dire que l'un et/ou l'autre des réactifs peut être introduit en un ou plusieurs points dans l'enceinte, tout en conservant la valeur souhaitée de la pression partielle de tétrachlorure dans le mélange gazeux de départ, reconstitué par l'addition des débits aux différents points d'alimentation.

En général, mais non limitativement, on se contente de deux points d'introduction par réactif et plus particulièrement un point pour le tétrachlorure et deux points pour la vapeur d'eau.

On observe que l'introduction des réactifs en plusieurs points permet d'obtenir une poudre de surface spécifique plus faible tout en évitant d'augmenter la taille des particules au-delà de 2 $\mu$m et sans augmenter significativement la formation d'agglomérats et d'agrégats.

Ce dispositif, et habituellement celui comportant deux introductions de vapeur d'eau, est avantageusement complété par le dispositif d'agitation et est ainsi particulièrement recommandé pour obtenir une poudre ayant une surface spécifique située vers les faibles valeurs ou une taille des grains plutôt grosse.

Les réactifs gazeux peuvent être introduits tels quels en prenant les précautions nécessaires pour qu'il ne se produise pas de condensation à l'intérieur ou à l'embouchure des conduits. Mais de préférence on les introduit à l'aide d'un gaz vecteur inerte vis à vis du milieu réactionnel, en général de l'azote ou, dans le cas de l'oxyde de titane, de l'oxygène ou de l'air, en respectant les conditions quantitatives prescrites plus haut. Ainsi lorsque l'on veut obtenir de grandes surfaces ou une granulométrie très fine, c'est-à-dire que l'on règle la pression partielle de tétrachlorure à une très basse valeur, l'emploi d'un gaz inerte peut être nécessaire. Le gaz inerte peut être introduit soit avec le tétrachlorure, soit avec la vapeur d'eau, soit avec ces deux réactifs. Il rend également plus aisé le réglage des pressions partielles aux valeurs choisies.

La vitesse d'introduction des gaz composant le milieu réactionnel joue également sur l'intimité du mélange et doit être telle que le temps de séjour des réactifs dans l'enceinte est de quelques secondes, généralement plus de 3 secondes et de préférence compris entre 8 et 25 secondes. Ce temps est calculé en divisant le volume de l'enceinte réactionnelle par le débit total des gaz, y compris le gaz inerte, obtenu en additionnant la totalité des débits mesurés à leur entrée dans l'enceinte, à la température de ladite enceinte.

Quand le temps de séjour est élevé, toutes choses égales par ailleurs, on a tendance généralement à obtenir une surface spécifique plus faible et une granulométrie plus grosse.

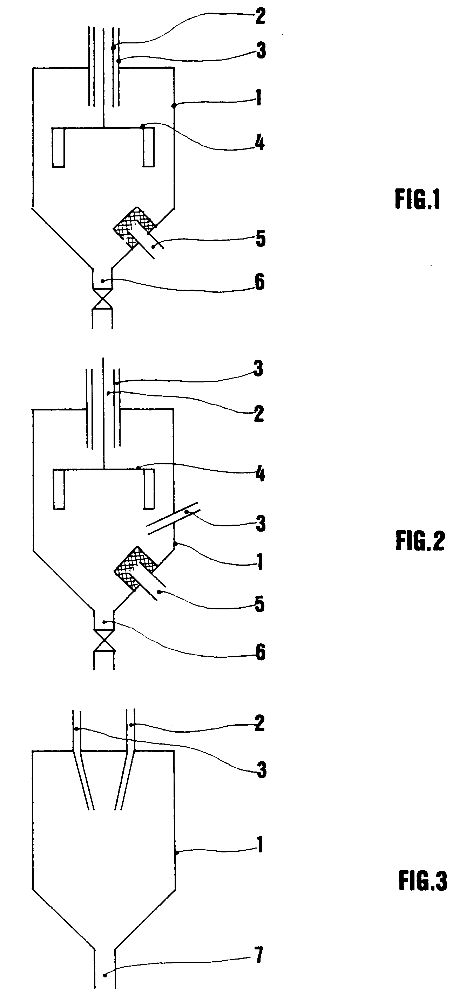

Les figures 1 à 3 représentent des exemples non limitatifs de dispositifs d'introduction de réactif et d'agitation possible; la signification des repères est la suivante:

1 représente l'enceinte réactionnelle

2 représente la ou les introductions de la vapeur de tétrachlorure avec ou sans gaz inerte

3 représente l'introduction de la vapeur d'eau avec ou sans gaz inerte

4 représente un agitateur à pales

5 représente l'évacuation des gaz équipée d'un filtre

6 représente la sortie de la poudre.

7 représente la sortie du réacteur vers une installation de séparation solide-gaz

Dans la figure 1, on a un réacteur avec agitation; le tétrachlorure et la vapeur d'eau y sont introduits en un seul point.

Dans la figure 2, on a également un réacteur agité, mais la vapeur d'eau est introduite en deux points.

Dans la figure 3, il n'y a pas d'agitation et chacun des réactifs est introduit en un seul point.

La figure 4 représente la surface spécifique BET de la poudre obtenue en fonction des réglages de la pression partielle du tétrachlorure de zirconium (hafnium) dans le mélange réactionnel de départ, la pression totale étant la pression atmosphérique. Plusieurs dispositifs d'introduction des réactifs ont été utilisés et on peut voir leur influence sur le résultat obtenu.

Les exemples suivants permettent d'illustrer les résultats obtenus avec principalement différents réglages des pressions partielles du tétrachlorure.

EXEMPLE 1

Dans cet exemple l'enceinte réactionnelle a un volume de 3 l; elle est équipée d'un agitateur rotatif à pales, du type de celui décrit dans la figure 1, tournant sur son axe.

Les réactifs sont introduits à l'aide de deux tubes concentriques audit axe selon un dispositif du type décrit dans la figure 1. La pression totale est de 100kPa, soit une atmosphère.

Une première série d'essais (90 à 93) a été effectuée à une température de 430°C et un temps de séjour de 22 secondes, avec du tétrachlorure de zirconium pur sublimé et de la vapeur d'eau, introduits dans le réacteur à l'aide d'azote. Les surfaces spécifiques et la granulométrie repérée par le diamètre médian et le refus à 0,2 μm sont données dans le tableau suivant, où sont également indiqués les autres paramètres opératoires et les teneurs en chlore obtenues:

On peut voir qu'avec une faible variation de la pression partielle de Zr Cl4 de 0,11 à 0,22 atm la surface spécifique correspondante se si tue dans des larges limites allant de 40 à 13 m2/g, de même que la granulométrie augmente.

En comparant les essais 91 et 93, on peut voir qu'un excès d'eau plus important dans l'essai 93, ne permet pas de compenser la diminution de surface spécifique et l'augmentation la granulométrie obtenue

TABLEAU 1

| ESSAI | PRESSION ZrCl4 kPa | PRESSION H2O kPa | $\frac{H2O}{ZrCl_4}$ molaire | TEMPERATURE °C | TEMPS SEJOUR sec | SURFACE BET m2/g | DIAMETRE MEDIAN µm | REFUS 0,2µm % | TENEUR en chlore % poids |
|---|---|---|---|---|---|---|---|---|---|
| 90 | 11,1 | 27,4 | 2,45 | 430 | 22 | 40 | ~0,1 | 19 | 3 |
| 92 | 17,2 | 77,0 | 4,47 | 430 | 22 | 24 | 0,16 | 41 | 1,5 |
| 91 | 21,3 | 59,8 | 2,81 | 430 | 22 | 19 | <0,1 | 10 | 1,8 |
| 93 | 22,3 | 66,9 | 3,00 | 430 | 22 | 13 | 0,36 | 73 | 1,3 |

par l'augmentation de la pression partielle de la pression partielle de tétrafluorure.

Dans une deuxième série d'essais (1 à 8), on a fait varier également la température de réaction et le temps de séjour, la pression totale étant toujours de 1 atm:

TABLEAU 2

| ESSAI | PRESSION Zr CL₄ kPa | PRESSION H2O kPa | $\frac{H2O}{ZrCl_4}$ molaire | TEMPERATURE °C | TEMPS SEJOUR sec | SURFACE BET m2/g | DIAMETRE MEDIAN µm | REFUS 0,2 µm % | TENEUR en Chlore % poids |
|---|---|---|---|---|---|---|---|---|---|
| 1 | 5,1 | 25,3 | 5 | 430 | 11,5 | 72 | < 0,1 | 12 | 4 |
| 3 | 5,1 | 41,5 | 8,2 | 430 | 24 | 68 | < 0,1 | 11 | 3,4 |
| 2 | 5,1 | 39,5 | 7,8 | 570 | 11,7 | 77 | < 0,1 | 4 | 2 |
| 4 | 4,1 | 29,4 | 7,25 | 570 | 23,5 | 73 | < 0,1 | 9 | 1,8 |
| 5 | 10,1 | 40,5 | 4 | 430 | 11,6 | 48 | < 0,1 | 9 | 2,7 |
| 7 | 13,2 | 27,4 | 2,07 | 430 | 23,2 | 38 | ~0,12 | 23 | 3,2 |
| 6 | 12,2 | 25,3 | 2,08 | 570 | 11,2 | 47 | < 0,1 | 10 | 1,9 |
| 8 | 12,2 | 41,5 | 3,42 | 570 | 23,2 | 47 | < 0,1 | 12 | 1,5 |

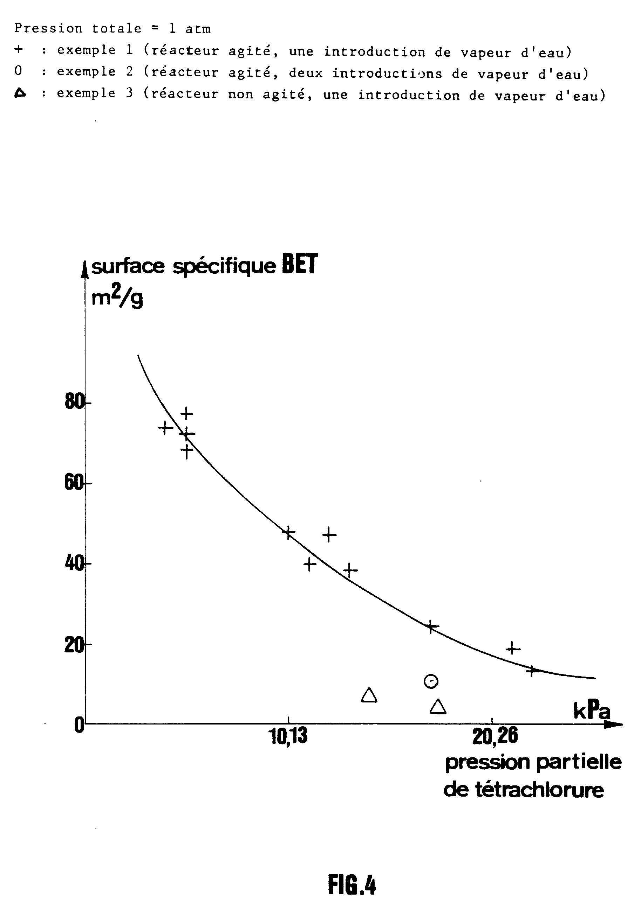

D'après ces tableaux et la courbe de la figure 4 (regroupant les points marqués +) qui en est tirée, on voit que les paramètres autres que la pression partielle du tétrachlorure ont un effet de deuxième ordre sur la surface spécifique; on voit en comparant les essais 2 et 4, qu'un temps de séjour plus élevé favorise l'obtention d'une surface BET plus faible et une granulométrie plus grosse.

EXEMPLE 2

L'enceinte agitée est la même que dans l'exemple 1, la pression totale est aussi de 1 atm; par contre, on dispose de deux endroits d'introduction de vapeur d'eau, du type indiqué dans la figure 2.

Le rapport des débits entre les introductions de vapeur d'eau supérieure et inférieure est de 0,58. On a obtenu les résultats suivants:

TABLEAU 3

| ESSAI | PRESSION Zr Cl$_4$ kPa | PRESSION H20 kPa | $\dfrac{\text{H20}}{\text{Zr Cl}_4}$ molaire | TEMPERATURE °C | TEMPS SEJOUR SEC | SURFACE BET m2/g | DIAMETRE MEDIAN µm | REFUS 0,2 µm % | REFUS 1 µm % poids |
|---|---|---|---|---|---|---|---|---|---|
| 100 | 17,2 | 54,7 | 3,18 | 450 | 22 | 10,7 | 0,32 | 73 | 1,4 |

On voit, par comparaison avec l'essai 92 qui est très proche, que la surface spécifique et la granulométrie obtenues sont sensiblement différentes, respectivement plus faibles et plus grosses, du fait que les deux points d'introduction du tétrachlorure correspondent à un mélange moins poussé des réactifs.

10

EXEMPLE 3

L'enceinte a un volume de 450 l. Il n'y a pas d'agitateur et les réactifs sont introduits à l'aide de deux tubes débouchant au même niveau; le tétrachlorure et la vapeur d'eau sont introduits en un seul point.

On a obtenu les résultats suivants:

TABLEAU 4

| ESSAI | PRESSION Zr Cl₄ kPa | PRESSION H2O kPa | $\frac{H2O}{Zr\ Cl_4}$ molaire | TEMPERATURE °C | TEMPS SEJOUR SEC | SURFACE BET m2/g | DIAMETRE MEDIAN µm | REFUS 0,2 µm % | REFUS 1 µm % |
|---|---|---|---|---|---|---|---|---|---|
| 831 | 17,7 | 48,6 | 2,74 | 500 | 10 | 3,6 | 1,2 | 100 | 56 |
| 832 | 14,2 | 49,6 | 3,5 | 500 | 10 | 6,8 | 0,78 | 95 | 39 |

Le niveau des résultats obtenus est à comparer à celui des essais 100 et 101 précédents; on voit qu'un mélange moins complet (absence d'agitation) permet de diminuer les surfaces spécifiques et grossir la granulométrie.

EXEMPLE 4

Cet exemple illustre l'application du procédé à l'obtention de hafnone. Il a été effectué dans la même enceinte agitée que celle utilisée dans l'exemple 1, la vapeur d'eau étant également introduite en un seul point.

Les paramètres opératoires sont les suivants:

| Essai 27. | |
|---|---|
| Pression totale | 1 atm |
| Pression $HfCl_4$ | 0,21 atm |
| Pression $H_2O$ | 0,59 atm |
| $H_2O/HfCl_4$ | 2,76 molaire |
| Température | 495 °C |
| Temps de séjour | 22 sec. |

Les résultats obtenus sont les suivants:

| | |
|---|---|
| Surface BET | 19,4 m2/g |
| Diamètre médian | 0,48 $\mu$m |
| Refus à 2 $\mu$m | 3% |
| Tenue en chlore | 1,4% poids. |

EXEMPLE 5

Cet exemple illustre l'application du procédé selon l'invention à l'obtention d'oxyde de titane à partir de son tétrachlorure vaporisé. Il a été réalisé selon le dispositif de l'Exemple 3. Les paramètres opératoires et les résultats sont rassemblés dans le tableau 5. La pression totale est toujours de 100 kPa (1 atm).

12

TABLEAU 5

| ESSAI | PRESSION TiCl$_4$ kPa | PRESSION H$_2$O kPa | H$_2$O/TiCl$_4$ molaire | TEMP. °C | TEMPS DE SEJOUR.sec | SURF. BET m$^2$/g | DIAMETRE MEDIAN µm | REFUS A 2 µm % |
|---|---|---|---|---|---|---|---|---|
| 850 | 13,1 | 78,6 | 6 | 500 | 12 | 6,9 | 0,8 | 15 |
| 851 | 23,3 | 69,9 | 3 | 500 | 10 | 3,6 | 1,45 | 32 |

Ainsi le procédé selon l'invention permet d'obtenir des poudres fines d'oxyde métallique (principalement zircone, hafnone, oxyde de titane), dont la surface spécifique BET ou la granulométrie sont contrôlées et ajustées à la demande en réglant la pression partielle du tétrachlorure et la quantité d'eau introduite à des valeurs prédéterminées. Par exemple, pour obtenir une surface BET supérieure à 60 m2/g ou une granulométrie fine correspondant à un refus à 2 µm inférieure à 15%, cette pression partielle doit être réglée à une valeur inférieure à 5% de la pression totale, le rapport molaire eau/tétrachlorure étant compris entre 2 et 8 et le milieu réactionnel de préférence agité. De même pour une surface spécifique qui ne doit pas dépasser 10 m2/g ou une granulométrie correspondant à un refus à 2 μm supérieur à 6O% ou à un diamètre médian de 0,3 à 0,4 μm, la pression partielle de tétrachlorure ne doit pas être inférieur à 13% de la pression totale, dans ce cas, il est préférable d'introduire le tétrachlorure ou la vapeur d'eau en plusieurs endroits, par exemple en deux points.

Il apparaît bien que la pression partielle de tétrachlorure, associée à une quantité d'eau introduite limitée, sont les facteurs prépondérants qui par leur maintien à une valeur donnée au cours du procédé permet d'obtenir une poudre à surface spécifque BET ou une granulométrie ayant une valeur choisie.

## Revendications

**1.** Procédé d'obtention directe d'une poudre fine d'oxyde métallique, tel que la zircone, l'hafnone ou l'oxyde de titane, composée de particules constituées d'un seul ou d'un petit nombre de cristallites élémentaires, ladite poudre ayant de plus une granulométrie choisie et contrôlée et une surface spécifique BET également choisie et contrôlée, procédé comportant l'hydrolyse en phase gazeuse à basse température, comprise entre 300-800°C, du tétrachlorure métalllique volatil correspondant à l'oxyde à obtenir, à l'aide de vapeur d'eau en présence d'un gaz inerte, la pression partielle de tétrachlorure étant maintenue à une valeur constante prédéterminée (comprise entre 3 et 30% de la pression totale du mélange réactionnel de départ, reconstitué fictivement par addition des débits des réactifs gazeux) fonction de la granulométrie et de la surface spécifique BET recherchées respectivement définies par un diamètre médian inférieur à 2 μm et comprise entre 3m2/g et 110 m2/g, caractérisé en ce que le rapport molaire eau sur tétrachlorure métallique est compris entre 2 et 10.

**2.** Procédé selon la revendication 2 caractérisé en ce que la pression partielle du tétrachlorure est comprise entre 4 et 25%, les valeurs correspondantes obtenues pour la surface spécifique BET étant comprises entre 5m$^2$/g et 80m$^2$/g, et pour la granulométrie étant comprises entre un diamètre médian d'environ 1,5 μm et un diamètre médian inférieur à 0,1 μm correspondant à un refus de 0,2 μm compris entre 5 et 10%.

**3.** Procédé selon la revendication 1 caractérisé en ce que la température de réaction est comprise entre 410°C et 600°C.

**4.** Procédé selon l'une quelconque des revendications 1 à 3, caractérisé en ce que le rapport molaire eau sur tétrachlorure métallique est compris entre 2 et 8.

**5.** Procédé selon l'une quelconque des revendication 1 à 4, caractérisé en ce que la réaction est effectuée en présence d'un gaz inerte vis-à-vis du milieu réactionnel, de préférence en présence d'azote, ou, dans le cas de l'oxyde de titane, d'oxygène ou d'air.

**6.** Procédé selon l'une quelconque des revendication 1 à 5, caractérisé en ce que le milieu réactionnel est agité.

**7.** Procédé selon l'une quelconque des revendications 1 à 6, caractérisé en ce que la vapeur d'eau est introduite dans l'enceinte réactionnelle en plusieurs points.

**8.** Procédé selon l'une quelconque des revendications 1 à 7, caractérisé en ce que le temps de séjour dans l'enceinte réactionnelle est supérieur à 3 secondes et préférentiellement compris entre 8 et 25 secondes.

**9.** Procédé selon l'une quelconque des revendications 2 à 8, caractérisé en ce que la pression partielle de tétrachlorure est réglée à une valeur inférieure à 5% de la pression totale pour obtenir une poudre dont la surface spécifique BET est supérieure à 60 m$^2$/g ou dont la granulométrie donne un refus à 2 μm inférieur à 15%.

**10.** Procédé selon l'une quelconque des revendications 2 à 8, caractérisé en ce que la pression du tétrachlorure est réglée à une valeur supérieure à 13% de la pression totale pour obtenir une poudre dont la surface spécifique BET est inférieure à 10 m$^2$/g ou dont la granulométrie donne un refus à 2

μm supérieur à 60%.

**Claims**

1. A process for the direct production of a fine powder of metal oxide such as zirconia, hafnium oxide or titanium oxide, composed of particles formed by a single or a small number of elementary crystallites, said powder also having a selected and controlled granulometry and a BET specific surface area which is also selected and controlled, the process comprising hydrolysis in the gaseous phase at low temperature of between 300 and 800°C of the volatile metal tetrachloride corresponding to the oxide to be produced, by means of water vapour in the presence of an inert gas, the partial pressure of tetrachloride being maintained at a predetermined constant value (between 3 and 30% of the total pressure of the initial reaction mixture which is notionally reconstituted by the addition of the flow rates of the gaseous reactants) in dependence on the desired granulometry and BET specific surface area which are respectively defined by a median diameter of less than 2 μm and between 3m2/g and 110 m2/g, characterised in that the molar ratio of water to metal tetrachloride is between 2 and 10.

2. A process according to claim 1 characterised in that the partial pressure of the tetrachloride is between 4 and 25%, the corresponding values obtained for the BET specific surface area being between $5m^2/g$ and $80m^2/g$ and for the granulometry being between a median diameter of about 1.5 μm and a median diameter of less than 0.1 μm corresponding to a refusal rate at 0.2 μm of between 5 and 10%.

3. A process according to claim 1 characterising in that the reaction temperature is between 410°C and 600°C.

4. A process according to any one of claims 1 to 3 characterised in that the molar ratio of water to metal tetrachloride is between 2 and 8.

5. A process according to any one of claims 1 to 4 characterised in that the reaction is carried out in a the presence of a gas which is inert with respect to the reaction medium, preferably in the presence of nitrogen or, in the case of titanium oxide, oxygen or air.

6. A process according to any one of claims 1 to 5 characterised in that the reaction medium is agitated.

7. A process according to any one of claims 1 to 6 characterised in that the water vapour is introduced into the reaction chamber at a plurality of points.

8. A process according to any one of claims 1 to 7 characterised in that the residence time in the reaction chamber is greater than 3 seconds and preferably between 8 and 25 seconds.

9. A process according to any one of claims 2 to 8 characterised in that the tetrachloride partial pressure is adjusted to a value of less than 5% of the total pressure to produce a powder whose BET specific surface area is higher than 60 $m^2/g$ or whose granulometry gives a refusal rate at 2 μm of less than 15%.

10. A process according to any one of claims 2 to 8 characterised in that the pressure of the tetrachloride is adjusted to a value of higher than 13% of the total pressure to produce a powder whose BET specific surface area is less than 10 $m^2/g$ or whose granulometry gives a refusal rate at 2 μm of higher than 60%.

**Patentansprüche**

1. Verfahren zur direkten Gewinnung eines feinen Metalloxidpulvers, wie Zirconiumoxid, Hafniumoxid und Titanoxid, das aus Teilchen aus einem einzigen elementaren Kristallit oder einer kleinen Anzahl davon besteht, wobei das Pulver eine ausgewählte und kontrollierte granulometrische Verteilung und eine ausgewählte und kontrollierte spezifische BET-Oberfläche aufweist, umfassend die Hydrolyse in der Gasphase bei niedriger Temperatur von 300 bis 800°C von dem zu erhaltenden Oxid entsprechenden, metallischen, flüchtigen Tetrachlorid mit Hilfe von Wasserdampf in Gegenwart eines inerten Gases, wobei der Partialdruck des Tetrachlorids auf einem vorbestimmten konstanten Wert (zwischen 3 und 30 % des Gesamtdruckes des Ausgangsreaktionsgemisches, das fiktiv durch Zugabe der Mengen der gasförmigen Reaktanten gebildet ist) als Funktion der gewünschten granulometrischen Verteilung und der spezifischen BET-Oberfläche, die durch einen mittleren Durchmesser unter 2 $\mu$m bzw. einen Wert von 3 bis 110 m$^2$/g definiert sind, gehalten wird, dadurch gekennzeichnet, daß das Molverhältnis von Wasser zu Metalltetrachlorid im Bereich von 2 bis 10 liegt.

2. Verfahren nach Anspruch 1, dadurch gekennzeichnet, daß, der Partialdruck des Tetrachlorids im Bereich von 4 bis 25 % liegt, die entsprechenden erhaltenen Werte für die spezifische BET-Oberfläche im Bereich von 5 bis 80 m$^2$/g liegen und die Werte für die granulometrische Verteilung im Bereich von einem mittleren Durchmesser von etwa 1,5 $\mu$m bis zu einem mittleren Durchmesser von weniger als 0,1 $\mu$m, entsprechend einem Siebrückstand bei 0,2 $\mu$m zwischen 5 und 10 %, liegen.

3. Verfahren nach Anspruch 1, dadurch gekennzeichnet, daß die Reaktionstemperatur im Bereich von 410 bis 600 °C liegt.

4. Verfahren nach einem der Ansprüche 1 bis 3, dadurch gekennzeichnet, daß das Molverhältnis von Wasser zu Metalltetrachlorid im Bereich von 2 bis 8 liegt.

5. Verfahren nach einem der Ansprüche 1 bis 4, dadurch gekennzeichnet, daß die Umsetzung in Gegenwart eines gegenüber dem Reaktionsmedium inerten Gases, vorzugsweise in Gegenwart von Stickstoff oder im Fall von Titanoxid in Gegenwart von Sauerstoff oder Luft durchgeführt wird.

6. Verfahren nach einem der Ansprüche 1 bis 5, dadurch gekennzeichnet, daß das Reaktionsmedium bewegt wird.

7. Verfahren nach einem der Ansprüche 1 bis 6, dadurch gekennzeichnet, daß der Wasserdampf in den Reaktionsraum an mehreren Stellen eingeführt wird.

8. Verfahren nach einem der Ansprüche 1 bis 7, dadurch gekennzeichnet, daß die Verweilzeit im Reaktionsraum mehr als 3 Sekunden und vorzugsweise 8 bis 25 Sekunden beträgt.

9. Verfahren nach einem der Ansprüche 2 bis 8, dadurch gekennzeichnet, daß der Partialdruck des Tetrachlorids auf einen Wert unter 5 % des Gesamtdrucks eingestellt wird, um ein Pulver zu erhalten, dessen spezifische BET-Oberfläche mehr als 60 m$^2$/g beträgt oder dessen granulometrische Verteilung einen 2 $\mu$m-Siebrückstand von weniger als 15 % ergibt.

10. Verfahren nach einem der Ansprüche 2 bis 8, dadurch gekennzeichnet, daß der Druck des Tetrachlorids auf einen Wert über 13 % des Gesamtdrucks eingestellt wird, um ein Pulver zu erhalten, dessen spezifische BET-Oberfläche weniger als 10 m$^2$/g beträgt oder dessen granulometrische Verteilung einen 2 $\mu$m-Siebrückstand von mehr als 60 % ergibt.

**FIG.1**

**FIG.2**

**FIG.3**

Pression totale = 1 atm

+  : exemple 1 (réacteur agité, une introduction de vapeur d'eau)

0  : exemple 2 (réacteur agité, deux introductions de vapeur d'eau)

△  : exemple 3 (réacteur non agité, une introduction de vapeur d'eau)

**FIG.4**